# EUROPEAN PATENT APPLICATION

(11) **EP 2 535 966 A1**
(43) Date of publication of application: **19.12.2012**
(21) Application number: 11742234.5
(22) Date of filing: 09.02.2011
(51) Int. Cl.: H01M 2/26, H01M 10/04

(54) **SECONDARY CELL, AND PRODUCTION DEVICE AND PRODUCTION METHOD FOR SECONDARY CELL**

(30) Priority: 09.02.2010 JP 2010026738
(71) Applicant: Mitsubishi Heavy Industries, Ltd., Tokyo 108-8215 (JP)
(72) Inventor: KANDA, Yoshiaki, Tokyo 108-8215 (JP); KOGURE, Masanori, Tokyo, 108-8215 (JP)
(74) Representative: Henkel, Breuer & Partner
(86) International application number: PCT/JP2011/052686
(87) International publication number: WO 2011/099491

(57) **Abstract**

Disclosed is a secondary cell equipped with an electrode terminal, a plurality of electrode plates (4) that are arranged side by side, and a stacked plurality of connecting members (7) that are joined at both ends to the aforementioned electrode terminal and the aforementioned plurality of electrode plates (4) and that electrically connect said electrode terminal and plurality of electrode plates (4). The aforementioned stacked plurality of connecting members (7) are folded in a serpentine shape between the aforementioned electrode terminal and the aforementioned plurality of electrode plates (4).

## Description

### Technical Field

The present invention is related to a secondary battery, a secondary battery manufacturing device, and a secondary battery manufacturing method.
Priority is claimed on Japanese Patent Application No. 2010-26738, filed on February 09, 2010, the content of which is incorporated herein by reference.

### Background Art of the Invention

An electrode module of a stacked-type secondary battery has a structure in which positive and negative electrode plates, each having an electrode tab provided at the edge thereof, are stacked with separators interposed between them. Patent Document 1 discloses a secondary battery, in which electrode tabs are drawn out from electrode plates, gathered and directly connected to a corresnponding electrode terminal.

In Patent Document 1, when the number of the electrode tabs is large (e.g., several hundreds of sheets), it is difficult to gather the electrode tabs or connect the electrode tabs to the electrode terminals. Further, because the thickness of the electrode tab is several micrometers (i.e., µm) ~ several millimeters (i.e., mm), which is similar to the electrode plate, stress concentration easily occurs. In particular, damage such as breakage is apt to occur to the electrode tab at the connection portion between the electrode tab and the electrode terminal. As a result, there is a concern that the performance of the battery may be degraded due to short-circuit caused by the damage.

On the other hand, Patent Document 2 discloses a secondary battery in which an electrode module is separated into a plurality of sheaves. In the secondary battery disclosed in Patent Document 2, the electrode tabs are gathered and bonded to an electrode lead in the sheaf of the electrode module. After the electrode leads are also gathered and bonded to the electrode terminal, and the electrode leads are folded and stored in a battery case. Accordingly, because the number of the electrode leads connected to the electrode terminal is smaller than the number of all electrode tabs that are directly connected to the electrode terminal, the efficiency for manufacturing the secondary batteries improves.

### PRIOR TECHNICAL DOCUMENTS

### Patent Documents

Patent Document 1: Japanese Patent Application, First Publication No. 2003-242957
Patent Document 2: Japanese Patent Application First Publication No. 2005-5215

### DETAILED DESCRIPTION OF THE INVENTION

### Problems to be solved by the Invention

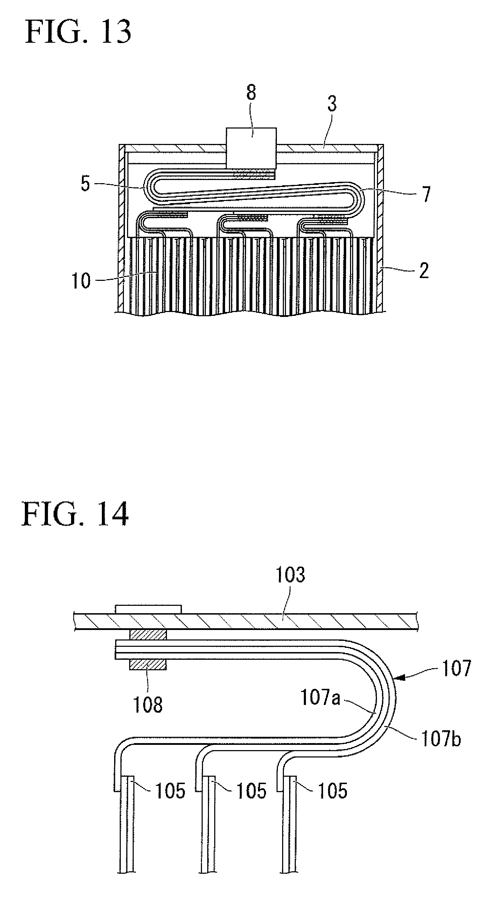

However, as shown in FIG. 14, electrode leads 107 disclosed in Patent Document 2 are folded only once in a tied state. Here, the electrode lead 107 disclosed in Patent Document 2 also works as an elastic member. And an electrode connected to the electrode lead 107 is able to be reliably stored inside the battery case, that includes a cover and a body. However, in the arrangement of the electrode leads 107 shown in FIG 14, the electrode leads cannot sufficiently work as the elastic member, because the electrode leads are folded only once.

Further, there is another problem that the relative positional relationship between both ends of the electrode lead 107 is forcibly changed due to the thickness of the electrode lead 107. In this case, because both ends of the electrode lead 107 are bonded and fixed to an electrode tab 105 or an electrode terminal 108, a compressive stress is generated in an inside electrode lead 107a of the bundle of the electrode leads 107, and a tensile stress is generated in an outside electrode lead 107b.

Accordingly, the electrode lead 107 itself or a bonding portion (or a fixed portion) around an end thereof connected to the electrode tab 105 or the electrode terminal 108 may be damaged. That is, at the bonding portion where the electrode lead 107 is connected to the electrode tab 105 or the electrode terminal 108, the stress is generated in the inside electrode lead 107a and the stress is generated in the outside electrode lead 107b. The directions that the two stresses are occurred are opposite each other. Therefore, the electrode lead may be broken at the bonding portion.

The invention is made to solve the above-described problems, and it is an object thereof to provide a secondary battery having excellent productivity, that is prevented from damaging at its electrode lead or at the bonding portions, when the plurality of electrode leads is folded in the battery case.

### Structures for Solving the Problem

A secondary battery of the invention includes: an electrode terminal; a plurality of electrode plates arranged side by side; and a plurality of connection plates stacked each other, and electrically connecting the electrode terminal to the plurality of electrode plates by connecting one ends of the connection plates to the electrode terminal and by connecting the other ends of the connection plates to the electrode plates. The connection plates are folded in a meandering shape between the electrode terminal and the plurality of electrode plates.

Here, as the connection plate, a conductive metallic plate material, for example, an electrode tab provided at one edge of the electrode plate or an electrode lead connected to the electrode tab, may be exemplified.

According to the above-described structure, because the stacked connection plates are formed in a meandering shape, a sufficient elastic function is obtained between the battery case and the cover. Accordingly, it is possible to reliably store the electrodes inside the battery case and reduce damages of the connection plate and the electrode terminal.

Further, a secondary battery manufacturing method of the invention includes: electrically fixing and connecting one side ends of connection plates electrically connected to stacked electrode plates, to an electrode terminal arranged at a battery cover; and folding the connection plates in a meandering shape after the connection plates are fixed to the electrode terminal.

According to this method, because the bundle of the electrode leads in the manufactured secondary battery is folded in a meandering shape, a sufficient elastic function is obtained between the battery case and the cover. Accordingly, it is possible to reliably store electrodes inside the battery case and reduce damages of the connection plate and the electrode terminal.

Furthermore, in a secondary battery manufacturing device of the invention, a secondary battery manufacturing device manufacturing a secondary battery having first and second electrode units respectively including a stack of electrode plates, and first and second connection plates of which one ends are respectively connected to the corresponding first and second electrode units and of which the other ends are connected to an electrode terminal fixed to a battery cover, the secondary battery manufacturing device comprising: a first pushing part to bend the first and the second connection plates to a first direction which is a direction for stacking the electrode plates ; a second pushing part to bend the first and the second connection plates bent by the first pushing part, to a second direction directed outward from the surfaces of the electrode plates; a battery cover connecting part to contact the electrode terminal fixed to the battery cover from the first direction with the ends of the first and the second connection plates bent to the second direction, and to connect the electrode terminal to the first and the connection plates; a battery cover fixing part to support the battery cover; and a third pushing part to bend the first and the second connection plates connected to the electrode terminal to a third direction opposite to the first direction, wherein the third pushing part and the battery cover fixing part are operated in a synchronized manner, the surface of the battery cover is arranged to be parallel to the first direction, and the contacted portion of the electrode terminal with the ends is arranged between the battery cover and the first and the second electrode units.

According to this manufacturing device, because the connection plates are formed in a meandering shape and the surface of the battery cover is directed toward the electrode units, it is possible to easily insert the electrode module into the battery case and fix the battery case to the battery cover by welding and so on.

### Advantageous Effects of the Invention

Although the connection members (i.e., an electrode tab, an electrode lead, or the like) are bent when they are stored in the battery case, it is possible to prevent the electrode lead or the connection portions from being damaged. Accordingly, it is possible to provide a secondary battery with excellent productivity.

### Brief Description of the Drawings

FIG. 1 is a perspective view illustrating a battery case of a secondary battery 1 according to an embodiment of the invention.
FIG. 2 is a cross-sectional view when an electrode plate unit of the secondary battery 1 is seen from the Y direction.
FIG. 3 illustrates the electrode plate unit of the secondary battery 1.
FIG. 4 is a cross-sectional view when the battery case of the secondary battery 1 is seen from the Y direction.
FIG. 5 is a cross-sectional view when the battery case of the secondary battery 1 is seen from the X direction.
FIG. 6 is a diagram illustrating a preparation process and an electrode lead bonding process of the secondary battery 1 according to the embodiment of the invention.
FIG. 7 is a diagram illustrating an electrode plate unit stacking process of the secondary battery 1 according to the embodiment of the invention.
FIG. 8 is a diagram illustrating an electrode tab bending process of the secondary battery 1 according to the embodiment of the invention.
FIG. 9 is a diagram illustrating an electrode lead bending process of the secondary battery 1 according to the embodiment of the invention.
FIG 10 is a diagram illustrating a battery cover arranging process of the secondary battery 1 according to the embodiment of the invention.
FIG 11 is a diagram illustrating the battery cover arranging process of the secondary battery 1 according to the embodiment of the invention.
FIG 12 is a perspective view illustrating a folding device for folding a bundle of electrode leads of the secondary battery 1 according to the embodiment of the invention.
FIG. 13 is a diagram illustrating the secondary battery 1 of which the body is closed with the battery cover.
FIG 14 is an diagram for explaining compressive stress and tensile stress generated in the electrode lead of Patent Document 2.
FIG. 15 is a flowchart for explaining a method of manufacturing the secondary battery of the invention.

### Description of Embodiments

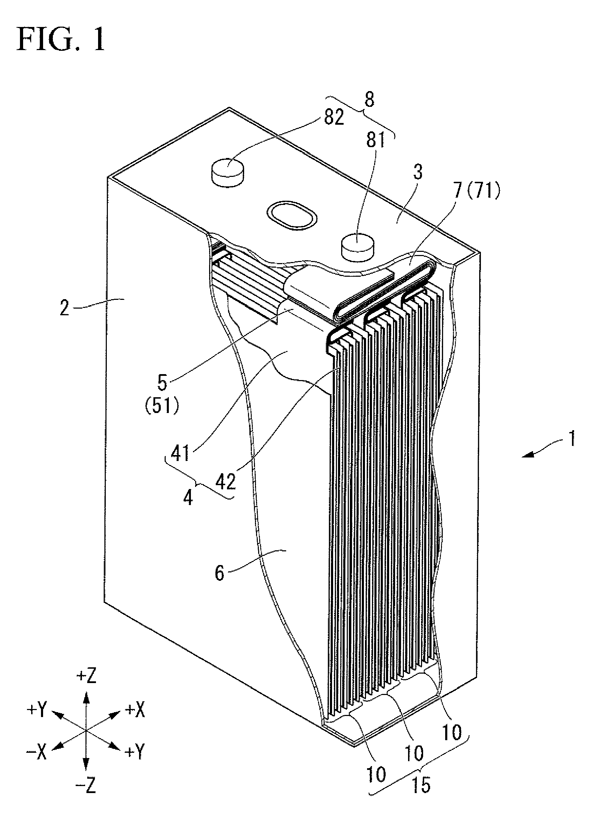

Hereinafter, an embodiment of a secondary battery according to the invention will be described by referring to FIGS. 1 to 5. As the secondary battery of the embodiment, for example, a lithium ion secondary battery is exemplified. In the description below, the positional relationship of the respective components will be described by referring to the XYZ orthogonal coordinate system shown in the respective drawings. Here, the X direction indicates the direction for stacking electrode plates, the Z direction indicates the direction in which an electrode tab protrudes from the electrode plate, and the Y direction indicates the direction perpendicular to the X direction and the Z direction.

A secondary battery 1 of the embodiment shown in FIG. 1 includes: a battery case 2, a battery cover 3, an electrode plate 4 (i.e., a positive electrode plate 41 or a negative electrode plate 42), an electrode tab 5 (i.e., a positive electrode tab 51 or a negative electrode tab 52), a separator 6, an electrode lead 7 (i.e., a positive electrode lead 71 or a negative electrode lead 72), an electrode terminal 8 (i.e., a positive electrode terminal 81 or a negative electrode terminal 82), a spacer 9, an electrode unit 10, and an electrode module 15. In the secondary battery 1, the electrode module 15 is separated into a plurality of electrode plate units 10. Each of the electrode plate units 10 includes the positive electrode plate 41, the negative electrode plate 42, and the separator 6, and has a structure in which the plurality of positive electrode plates 41 and the negative electrode plates 42 are alternately stacked in the X direction. The separators 6 are arranged between the electrode plates 41 and 42.

Furthermore, for electrically connecting the electrode plate 4 and the electrode terminal 8 to each other, the electrode tab 5 may be gathered and directly connected to the electrode terminal 8, or the electrode plate 4 and the electrode terminal 8 may be connected to each other through the electrode lead 7. In this embodiment, the electrode lead 7 between the electrode plate 4 and the electrode terminal 8 will be described below, as a connection plate material.

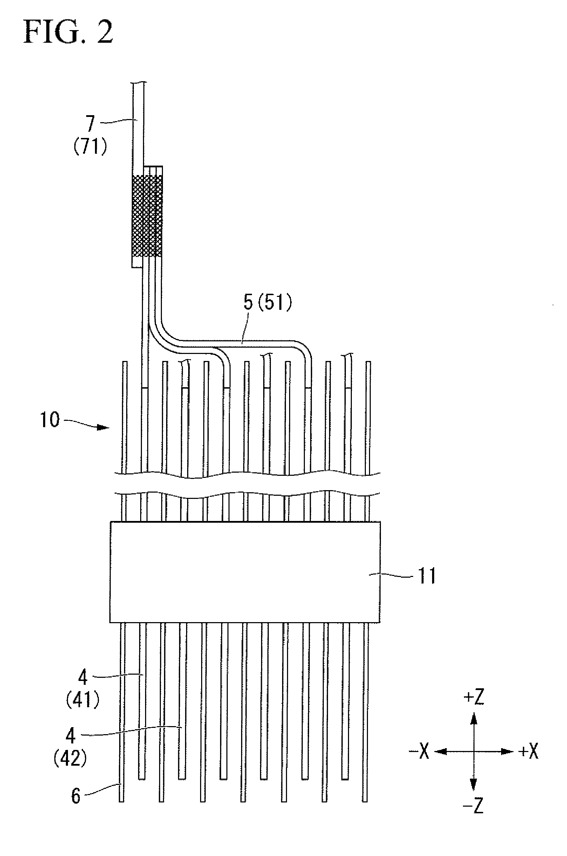

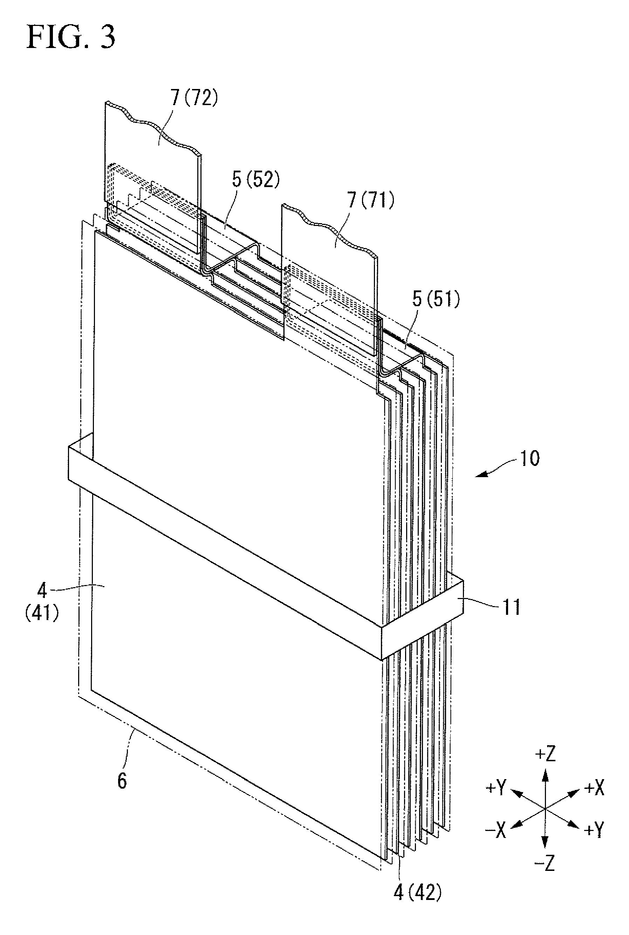

FIGS. 2 and 3 are diagrams illustrating the structure of the electrode unit 10. As shown in FIG. 2, although all of the positive electrode tabs 51 protrude from the corresponding edge of the positive electrode plates 41 to the +Z direction, the most of positive electrode tabs 51 among all of the positive electrode tabs 51 are bent to the -X direction substantially and perpendicularly, and are further bent to the +Z direction substantially and perpendicularly at the edge of the electrode plate unit 10. And then, all of the positive electrode tabs 51 are gathered and tied up in a bundle, and connected to the positive electrode lead 71.

Here, the positive electrode tabs 51 and the positive electrode lead 71 are bonded and connected to each other by ultrasonic welding or the like. In the same manner, the negative electrode tabs 52 in the electrode plate unit 10 are gathered and bonded to the negative electrode lead 72.

FIG. 3 illustrates a structure in which the positive electrode tabs 51 is gathered and bonded to the positive electrode lead 71 and in which the negative electrode tabs 52 are gathered and bonded to the negative electrode lead 72. In the electrode unit 10, the stacked structure including the positive electrode plates 41, the negative electrode plates 42, and the separators 6, is fixed by a binding member 11 in order that the electrode plates are prevented from changing their relative position from a predetermined and planed position. The changing their relative position from the predetermined and planed position is called as the "stack deviation". Furthermore, an insulating tape is typically used as the binding member 11.

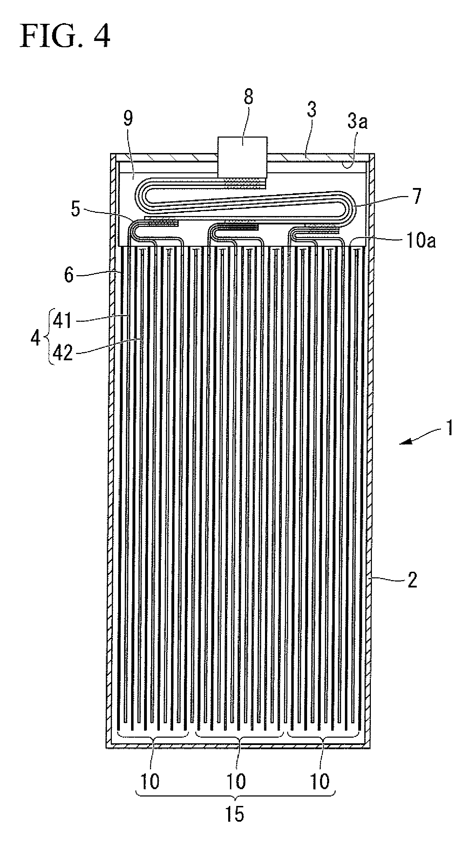

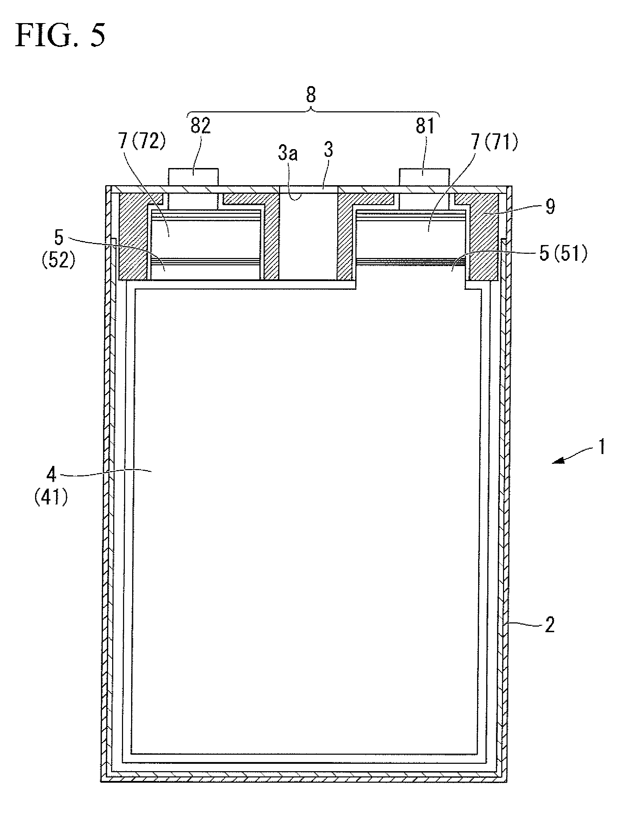

FIG. 4 is a cross-sectional view when the battery case of the secondary battery 1 is seen from the Y direction, and FIG. 5 is a cross-sectional view when the battery case of the secondary battery 1 is seen from the X direction. As shown in FIGS. 4 and 5, the plurality of positive electrode tabs 51 gathered for each electrode unit 10 is fixed to the positive electrode lead 71 (e.g., one positive electrode lead corresponds to one electrode unit) corresponding to the electrode unit 10 to be electrically bonded thereto. The plurality of positive electrode leads 71 are also gathered to each other and are fixed to the positive electrode terminal 81 to be electrically bonded thereto. Then, they are folded an even number of times in a meandering shape as shown in FIG. 4.

In the embodiment, the gathered positive electrode leads 71 are folded twice in an S-shape and are stored in the battery case 2. In the same manner, the plurality of negative electrode tabs 52 gathered for each electrode unit 10 are electrically bonded to the negative electrode lead 72 corresponding to each electrode unit 10. Then, the plurality of negative electrode leads 72 is also gathered and tied to each other, is electrically bonded to the negative electrode terminal 82, is folded twice in an S-shape as shown in FIG. 4, and is stored in the battery case 2.

Furthermore, as shown in FIGS. 4 and 5, the spacer 9 is arranged in the space between an inner surface 3 a of the battery cover 3 and an upper surface 10a of the electrode unit 10, and is contacted with the respective surfaces. The spacer 9 is formed of an insulating material such as PET (i.e., polyethylene terephthalate), and works to fix the electrode leads 7 at the predetermined position as described below. Furthermore, the spacer 9 is not essentially needed, but may be appropriately omitted.

In FIG. 4, the positive electrode lead 71 and the negative electrode lead 72 are folded twice in a meandering shape, but may be formed in at least a meandering shape, when only the safety of the electrode inside the battery case is considered. Because the meandering shapes of the electrode leads are able to generate elastic force like a spring action, the electrode module 15 is able to be reliably stored at a predetermined position inside the battery case 2.

In the secondary battery 1 of the above-described embodiment, the positive electrode leads 71 corresponding to each electrode unit 10 are gathered and tied up in a bundle, and the bundle is bent or folded twice like an S-shape as shown in FIG. 4. Further, the negative electrode leads 72 corresponding to each electrode unit 10 are gathered and tied up in a bundle, and the bundle is bent or folded like the S-shape as shown in FIG. 4. In this manner, because the electrode leads 7 (i.e., the positive electrode lead 71 and the negative electrode lead 72), that are connected and fixed to the electrode tab 5 and the electrode terminal 8 at ends of the electrode leads 7, are folded twice in an S-shape, it is possible to suppress compressive stress and tensile stress on the electrode leads 7. Therefore, the electrode lead 7 itself or the bonding portion at an end of the electrode lead 7 is prevented from being damaged, although the bonding portion is a part for connecting the end and the electrode tab 5 or the electrode terminal 8.

This point will be described in detail. One side ends of the electrode leads 7 are respectively connected to the corresponding electrode tabs 5 and the other side ends are respectively connected to the corresponding electrode terminal 8 before the electrode leads are folded in an S-shape. When the electrode leads 7 are bent in a U-shape, because both ends of the electrode lead 7 are fixed, stress is generated at each bonding portion. That is, tensile stress is generated on the electrode lead located at the outside from the center of the bundle of the electrode leads 7, and a compressive stress is generated on the electrode lead located at the inside from the center of the bundle. The stress generated at the bonding portion becomes larger, when the location of the electrode lead is away from the center of the bundle of the electrode leads 7 more and more.

Then, when one of the U-shaped electrode leads has tensile stress that have been generated since the U-shaped electrode leads are formed and when the U-shaped electrode leads are bent once more to be formed in an S-shape, compressive stress is generated on the one, because the electrode leads 7 are bent twice. As a result, the stress generated at the bonding portion is canceled and removed.

As mentioned above, by bending the positive and the negative electrode leads 7 in an S-shape as shown in FIG. 4, the stress generated around the bonding portion of the electrode lead 7 is removed. Therefore, the bonding portion is prevented from being damaged. Further, because the electrode leads are bent, the flexion of each electrode lead 7 is prevented.

Further, because it is not needed to make the lengths of the electrode leads 7 to different ones and because the electrode leads 7 have the same length, the productivity for making the secondary batteries improves. Furthermore, because the safety of the secondary batteries improves as described above, that is, each electrode plate unit 10 is fixed into the battery case 2, it is possible to suppress each electrode plate unit 10 from being deviated or hopped in the battery case due to external impact or vibration. Further, because the electrode plate 4, the electrode tab 5, the electrode lead 7, and the like are prevented from being damaged, it is possible to prevent the degradation of the battery performance due to the short-circuit.

Furthermore, in order to more reliably suppress a positional deviation of electrodes in the battery case 2, the pushing force of the battery cover 3 may act on each electrode unit 10 through the spacer 9, in order that the electrode unit 10 is pushed between the spacer 9 and the bottom plate portion of the battery case 2.

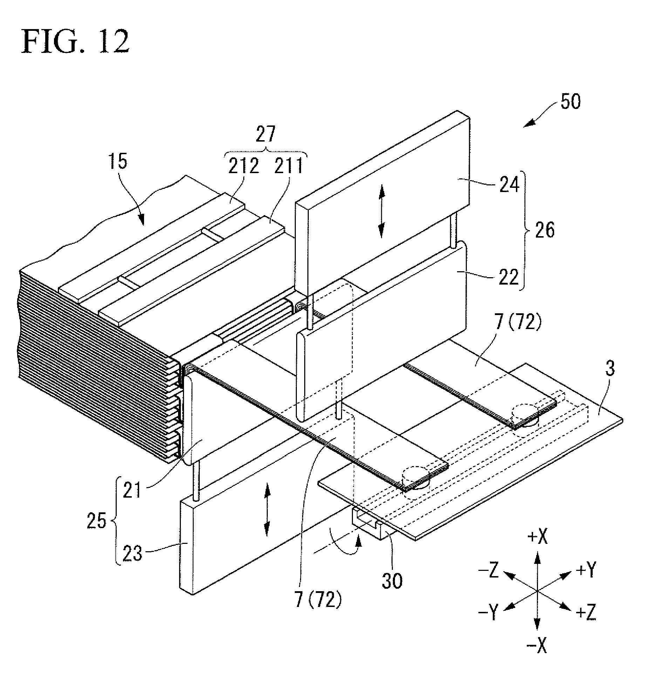

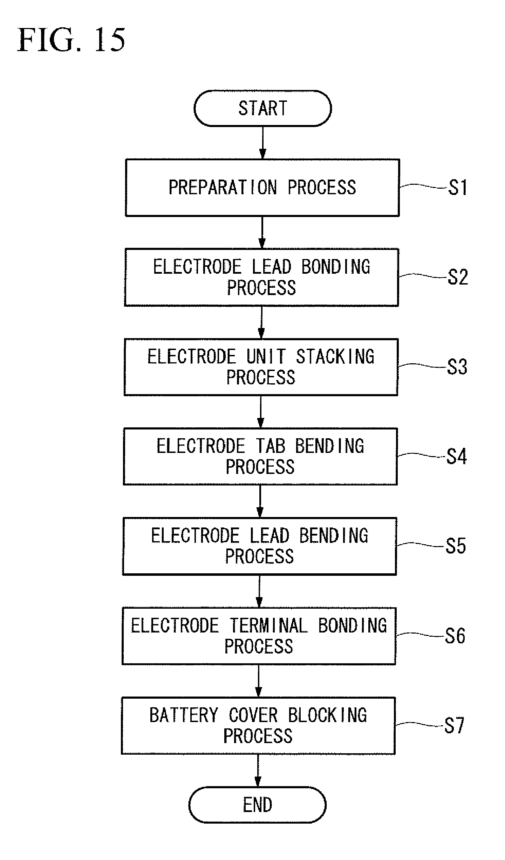

Next, the respective steps relating to the method of manufacturing the secondary battery of the above-described embodiment will be described by referring to the flowchart shown in FIG. 15 and FIGS. 6 to 13.
Furthermore, FIG. 12 illustrates a folding device 50 used after step S4 to be described later, for forming a bundle of the electrode leads 7. The folding device 50 includes three pushing parts 25, 26, and 27 and a battery cover fixing part 30. The pushing parts 25, 26, and 27 respectively include pushing members 21, 22, and 211. Actuators 23 and 24 are configured to reciprocate in the ±X direction, and an actuator 212 is configured to reciprocate in the ±Z direction. Further, the battery cover fixing part 30 is configured to be movable in the X and the Z directions with rotating about the Y axis.

### (Step S1: preparation process)

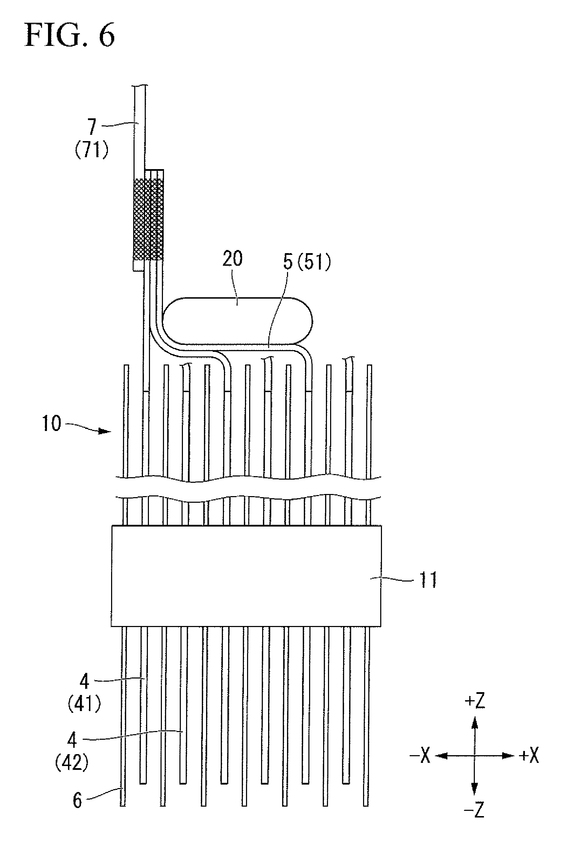

A preparation process is performed before the electrode tabs 5 and the electrode leads 7 are electrically connected to each other. Specifically, as shown in FIG 6, in each electrode unit 10, the plurality of electrode tabs 5, protruding from the edges of the electrode plates 4 to the +Z direction, is put to the -X direction by the pushing member 20 and is tied to each other along the Z direction at an edge located at -X side of the electrode unit 10.

### (Step S2: electrode lead bonding process)

As shown in FIG. 6, the bundles of the electrode tabs 5 in the electrode units 10 are electrically connected to the corresponding electrode lead 7. The electrode tabs 5 and the electrode lead 7 may be bonded and connected to each other by the ultrasonic welding or the like.

### (Step S3: electrode unit stacking process)

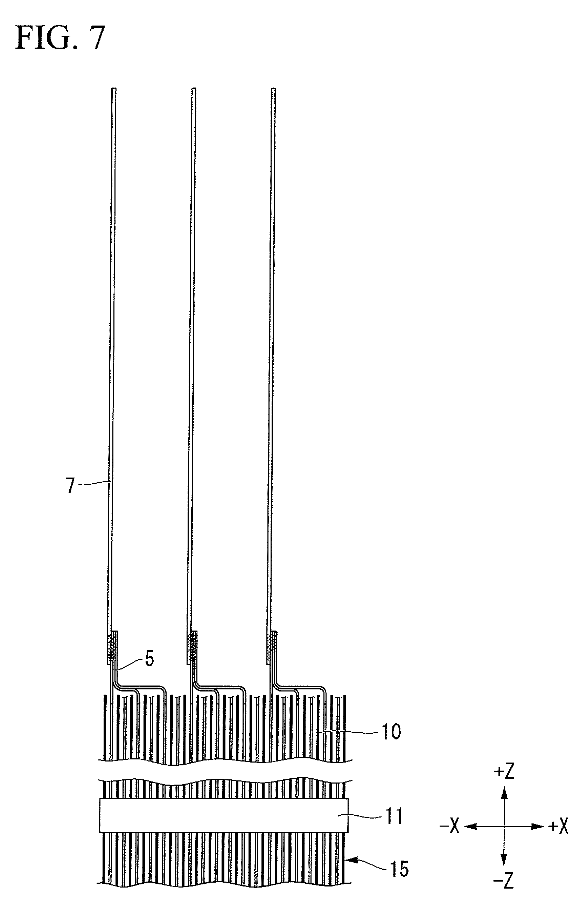

As shown in FIG. 7, in an electrode lead bonding process, the plurality of electrode units 10 each having the electrode lead 7 bonded to the electrode tabs 5 are stacked along the X direction, and are binded by the binding member 11. Furthermore, the electrode plate unit stacking process may be performed before step S1 and step S2.

### (Step S4: electrode tab bending process)

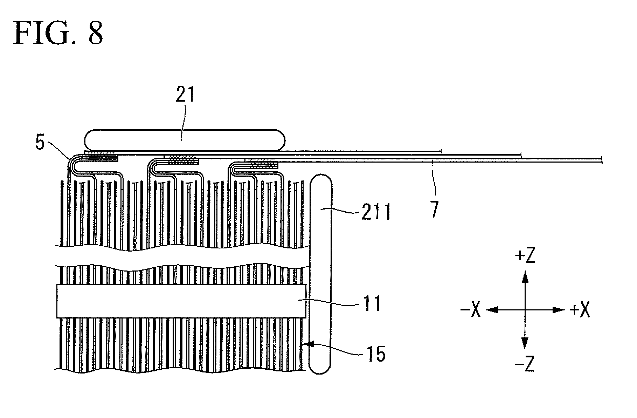

Subsequently, as shown in FIG. 8, the bundles of the electrode tabs 5 are bent to the +X direction, while the electrode leads 7 of electrode units 10 are pushed by the pushing member 21 to the -Z direction. As a result, the electrode leads 7 are assembled along the +X direction. Here, the pushing member 211 is disposed at a side of the electrode module 15, and waits for the operation in step S5.

### (Step S5: electrode lead bending process)

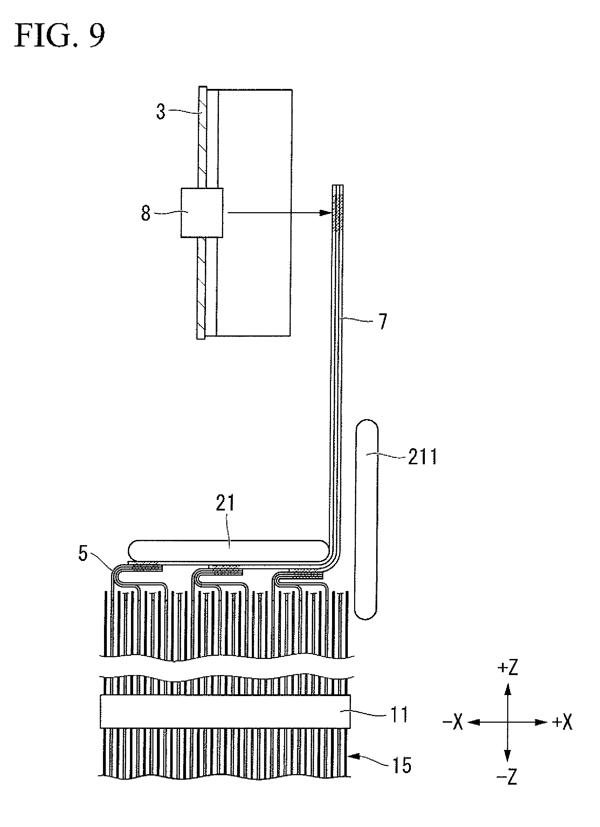

Then, as shown in FIG. 9, the pushing member 211 disposed at the side of the electrode module 15 is moved to the +Z direction. Therefore, the bundle of the electrode leads 7 is bent to the +Z direction at the edge of the electrode module 15 by the pushing member 21, and the front ends of the electrode leads 7 are arranged to the +Z direction.

### (Step S6: electrode terminal bonding process)

Next, as shown in FIG 9, the bundle of the electrode leads 7 is electrically bonded and connected to the electrode terminal 8 provided at the battery cover 3. This bonding is performed by, for example, riveting. Specifically, the end of the bundle in the -X direction and the terminal surface of the electrode terminal 8 inside the battery cover 3 are bonded to each other, without further bending the bundle of the electrode leads 7.
Furthermore, in order to facilitate the bonding work, the ends of the bundle of the electrode leads 7 may be trimmed at a predetermined position and the trimmed ends may be integrally bonded in advance before being bonded to the electrode terminal 8.

### (Step S7: battery cover blocking process)

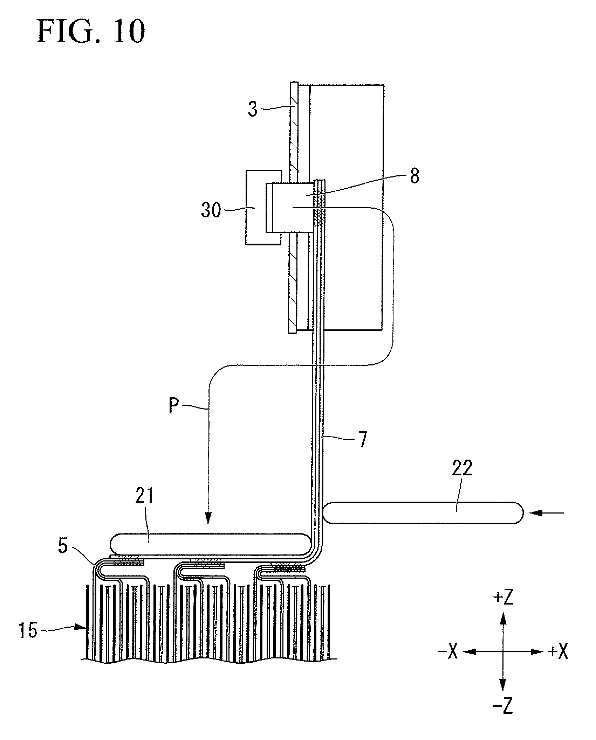

Then, as shown in FIG. 10, the pushing member 22 is inserted from the +X direction to the -X direction so as to be overlapped slightly above the pushing member 21, while the pushing member 21 is fixed and is not moved at this time. Furthermore, the battery cover fixing part 30 to hold and to support the battery cover 3 sequentially extrudes the battery cover 3 from the -X direction to the +X direction and from the +Z direction to the -Z direction in a manner synchronized with the operation of the pushing member 21.
Then, the battery cover 3 moves in the direction perpendicular to the stacking direction of the electrode modules 15, while the battery cover 3 is rotated by 90° in the clockwise direction as depicted by the arrow P shown in FIG. 10. Because the battery cover 3 is directed toward such a position, the portion, where the electrode leads 7 and the electrode terminal 8 are connected, is arranged between electrode units 10 and the battery cover 3. Further, it is possible to facilitate the insertion of the electrode module 15 into the battery case 2 and the welding of the battery case 2 and the battery cover 3.

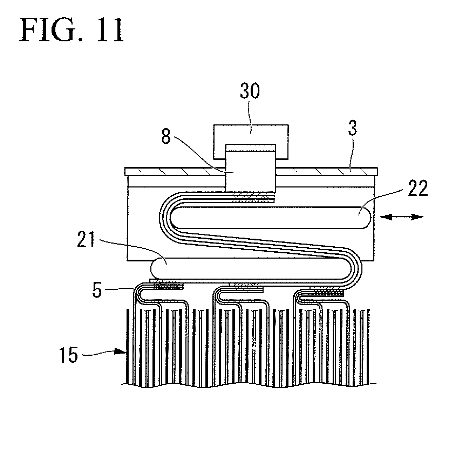

Therefore, as shown in FIG. 11, the bundle of the electrode leads 7 is bent in an S-shape. Subsequently, after the pushing members 21 and 22 are removed, the battery cover 3 is fixed to the opening of the battery case 2 as shown in FIG. 13, with maintaining the S-shape of the bundle of the electrode leads 7 by pressing the bundle to the -Z direction by the battery cover 3, to finish to form the secondary battery 1.
In the embodiment, the electrode lead 7 is folded an even number of times (e.g., twice to form the S-shape) in a meandering shape. However, when only the safety of the electrodes inside the battery case is considered, the number of times of folding the electrode leads is not limited to an even number of times, but may be odd number of times equal to or more than three times. That is, at this time, it is possible to have any number of times as long as the electrode leads have a meandering shape.
In addition to the safety of the electrodes, in order to reduce and prevent the damage of the bonding portion by removing the stress generated around the bonding portion between the electrode lead 7 and the electrode terminal 8, it is desirable that the electrode lead 7 be bonded and fixed to the electrode terminal 8 and be folded an even number of times in a meandering shape.
In the folding device 50, the pushing parts 25, 26, and 27 are disposed to bend the electrode lead 7 twice in an S-shape after the electrode lead 7 is bonded and fixed to the electrode terminal 8. However, when the meandering shape is obtained by bending the electrode lead odd number of times equal to or more than three times or an even number of times equal to or more than four times, any pushing parts may be appropriately further provided at the device.

### Description of the Reference Symbols

- 1:: SECONDARY BATTERY
- 2:: BATTERY CASE
- 3:: BATTERY COVER
- 3a:: BATTERY COVER INNER SURFACE
- 4:: ELECTRODE PLATE
- 41:: POSITIVE ELECTRODE PLATE
- 42:: NEGATIVE ELECTRODE PLATE
- 5, 105:: ELECTRODE TAB
- 51:: POSITIVE ELECTRODE TAB
- 52:: NEGATIVE ELECTRODE TAB
- 6:: SEPARATOR
- 7, 107:: ELECTRODE LEAD
- 71:: POSITIVE ELECTRODE LEAD
- 72:: NEGATIVE ELECTRODE LEAD
- 8, 108:: ELECTRODE TERMINAL
- 81:: POSITIVE ELECTRODE TERMINAL
- 82:: NEGATIVE ELECTRODE TERMINAL
- 9:: SPACER
- 10:: ELECTRODE UNIT
- 10a:: ELECTRODE UNIT UPPER SURFACE
- 11:: BINDING MEMBER
- 15:: ELECTRODE MODULE
- 20, 21, 22, 211:: PUSHING MEMBER
- 23, 24, 212:: ACTUATOR
- 25, 26, 27:: PUSHING PART
- 30:: BATTERY COVER FIXING PART
- 50:: FOLDING DEVICE

## Claims

1. A secondary battery comprising:
an electrode terminal;
a plurality of electrode plates arranged side by side; and
a plurality of connection plates stacked each other, and electrically connecting the electrode terminal to the plurality of electrode plates by connecting one ends of the connection plates to the electrode terminal and by connecting the other ends of the connection plates to the electrode plates,
wherein the connection plates are folded in a meandering shape between the electrode terminal and the plurality of electrode plates.

2. The secondary battery according to claim 1, wherein
the connection plates are folded an even number of times in a meandering shape between the electrode terminal and the electrode plates with being fixed at the one ends to the electrode terminal and at the other ends to the electrode plates.

3. The secondary battery according to claim 1 or 2, wherein
the connection plate is an electrode lead of that the other end is connected to the electrode tabs arranged at side edges of the electrode plates.

4. A secondary battery manufacturing device manufacturing a secondary battery having first and second electrode units respectively including a stack of electrode plates, and first and second connection plates of which one ends are respectively connected to the corresponding first and second electrode units and of which the other ends are connected to an electrode terminal fixed to a battery cover, the secondary battery manufacturing device comprising:
a first pushing part to bend the first and the second connection plates to a first direction which is a direction for stacking the electrode plates ;
a second pushing part to bend the first and the second connection plates bent by the first pushing part, to a second direction directed outward from the surfaces of the electrode plates;
a battery cover connecting part to contact the electrode terminal fixed to the battery cover from the first direction with the ends of the first and the second connection plates bent to the second direction, and to connect the electrode terminal to the first and the connection plates;
a battery cover fixing part to support the battery cover; and
a third pushing part to bend the first and the second connection plates connected to the electrode terminal to a third direction opposite to the first direction,
wherein the third pushing part and the battery cover fixing part are operated in a synchronized manner, the surface of the battery cover is arranged to be parallel to the first direction, and the contacted portion of the electrode terminal with the ends is arranged between the battery cover and the first and the second electrode units.

5. A secondary battery manufacturing method comprising:
electrically fixing and connecting one ends of connection plates electrically connected to stacked electrode plates, to an electrode terminal arranged at a battery cover; and
folding the connection plates in a meandering shape after the connection plates are fixed to the electrode terminal.
